## Europäisches Patentamt
### European Patent Office
### Office européen des brevets

(11) Publication number: **0 194 236**
**A1**

# (12) EUROPEAN PATENT APPLICATION

(21) Application number: 86830038.5

(22) Date of filing: 14.02.86

(51) Int. Cl.⁴: **B60R 13/02** , B60R 13/06

(30) Priority: 26.02.85 IT 5303385 U

(43) Date of publication of application:
**10.09.86 Bulletin 86/37**

(84) Designated Contracting States:
**DE FR GB SE**

(71) Applicant: FIAT AUTO S.p.A.
Corso Giovanni Agnelli 200
I-10135 Torino(IT)

(72) Inventor: Franzero,.Pier Renato
Via Spazzapan Luigi 12
I-10135 Torino(IT)
Inventor: Gianotti, Giovanni
Via Don Bertolino 36
I-10092 Beinasco (Torino)(IT)

(74) Representative: Notaro, Giancarlo et al
c/o Jacobacci-Casetta & Perani S.p.A. Via Alfieri, 17
I-10121 Torino(IT)

(54) Motor vehicle door with an auxiliary element of plastics material for supporting the weather strip of the window.

(57) A motor vehicle door has a frame (2) which defines a window opening (3) and a weather strip (10) disposed along the edge of the window opening (3) and cooperating with the edge of the glass (11). The weather strip is supported by an auxiliary element (7) of plastics material which is placed along the rear, upper and front edges (4-6) of the window opening (3), and which has one portion fixed to the frame (2) of the door and one portion which projects from the frame (2) and has an edge (9) for supporting the weather strip (10).

FIG. 5

FIG. 1

1/2

EP 0 194 236 A1

The present invention relates to a motor vehicle door and its object is that of simplifying and facilitating the construction and assembly of the door.

With a view to achieving this object, the invention has as its subject a motor vehicle door having a frame which defines a window opening and a weather strip disposed along the edge of the window opening and cooperating with the edge of the glass, the main characteristic of which is that the weather strip is supported by an auxiliary element of plastics material fixed to the door frame.

According to another characteristic, the element of plastics material is in the form of a strip and has one portion fixed to the frame of the door along the edge of the window opening and one portion which projects from the frame and has an edge for supporting the weather strip.

Preferably, the auxiliary element is constituted by a continuous strip which is disposed along the rear, upper and front edges of the window opening.

Due to the use of the auxiliary element of plastics material, the weather strip of the window can be fitted firstly to the element and the auxiliary element, together with the weather strip supported thereby, can then be fitted to the frame of the door in any known manner. Thus the fitting operations will be considerably facilitated.

Further characteristics and advantages of the invention will become apparent from the description which follows with reference to the appended drawings provided purely by way of non-limiting example, in which:

Figure 1 is a partial perspective view of a motor vehicle door from the inner side,

Figures 2 to 4 are sections taken along the lines II -II, III -III and IV -IV of Figure 1, and

Figure 5 illustrates a detail of Figure 3 on an enlarged scale.

In the drawings a motor vehicle door, generally indicated 1, has a sheet metal frame 2 which defines a window opening 3. Along the rear edge 4, the upper edge 5 and the front edge 6 of the window opening is disposed an auxiliary element 7 of plastics material in the form of a continuous strip, which includes a portion 8 fixed to the frame 2 of the door in any known manner, for example by screws (not illustrated), and an edge 9 of T-shaped cross-section supporting a weather strip 10 which cooperates with the edge of the glass of the window (indicated 11).

The weather strip 10 comprises an active part of 10a having a seat 12 for the edge of the glass, and a subsidiary part 13 having a channel 14 within which the T-sectioned edge 9 of the auxiliary element 7 of the plastics material is received.

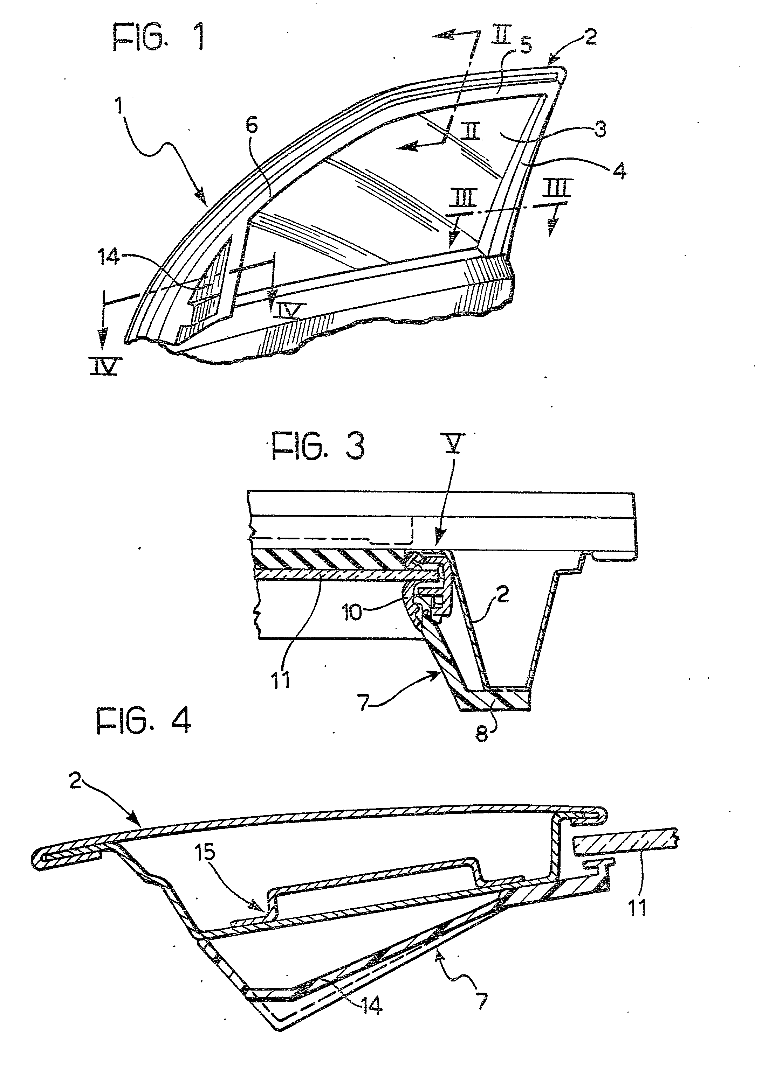

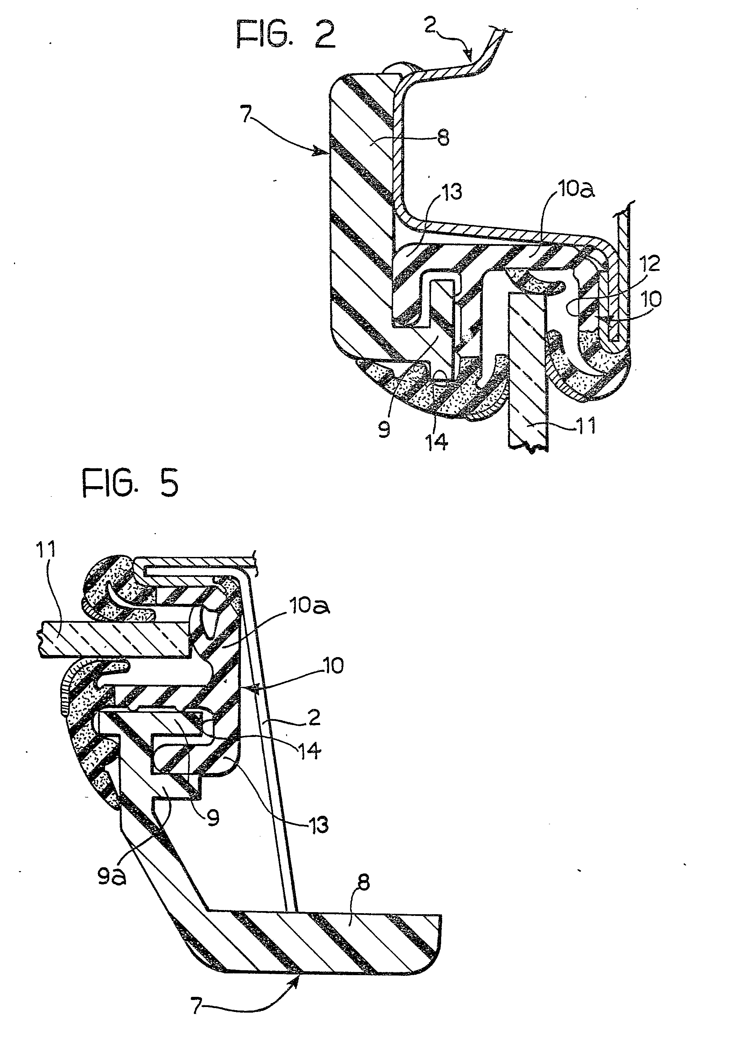

As illustrated in Figures 3 and 5, that portion of the element 7 of the plastics material which supports the weather strip in correspondence with the rear edge of the window opening includes a further additional appendage 9a for the correct positioning of the weather strip 10.

In correspondence with the lower end of the front edge of the window opening, the auxiliary element 7 of plastics material has a substantially triangular enlarged portion 14 which conceals a part 15 of the sheet metal structure of the door used for the fitting of the external rear-view mirror of the motor vehicle.

During manufacture of the motor vehicle, the weather strip 10 is fitted firstly to the auxiliary element 7 of plastics material and the unit constituted by the element and the weather strip is then fitted to the frame of the door.

Thus, the fitting of the weather strip of the window to the door will be considerably simplified and facilitated.

When the door is closed, the element 7 of plastics material comes into contact with the conventional weather strip provided on the body of the motor vehicle. In this condition, therefore, the auxiliary element 7 also constitutes a spacer element between the weather strip carried by the body of the motor vehicle and the sheet metal structure 2 of the door. Due to this arrangement the door structure will be less complicated and easier to manufacture.

Naturally, the principle of the invention remaining the same, the details of construction may be varied widely from what has been described purely by way of example, without thereby departing from the scope of the present invention.

**Claims**

1. Motor vehicle door having a frame (2) which defines a window opening (3) and a weather strip (10) disposed along the edge of the window opening (3) and cooperating with the edge of the glass (11), characterised in that the weather strip is supported by an auxiliary element (7) of plastics material fixed to the frame (2) of the door.

2. Motor vehicle door according to Claim 1, characterised in that the auxiliary element (7) of plastics material has one portion fixed to the frame (2) of the door and one portion which projects from the frame (2) and has an edge (9) for supporting the weather strip (10).

3. Motor vehicle door according to Claim 2, characterised in that the auxiliary element is placed along the rear, upper and front edges (4 -6) of the window opening (3).

4. Motor vehicle door according to Claim 3, characterised in that, in correspondence with the lower end of the front edge (6) of the window opening (3), the auxiliary element (7) of plastics material extends into an enlarged end portion (14) of substantially triangular shape.

5. Motor vehicle door according to Claim 2, characterised in that the edge (9) of the auxiliary element (7) of plastics material which supports the weather strip (10) has a substantially T-shaped cross-section and is located in a channel (14) of corresponding section in the weather strip (10).

6. Motor vehicle door according to Claim 5, characterised in that the weather strip (10) has a main part (10a) for cooperating with the edge of the glass of the window, and a subsidiary part (13) within which the channel (14) that receives the support edge (9) of the auxiliary element (7) of the plastics material is formed.

0 194 236

FIG. 1

FIG. 3

FIG. 4

0 194 236

FIG. 2

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 883 091 (BAYERISCHE MOTOREN WERKE) * Page 1, lines 29-107; figure 1 * | 1,3 | B 60 R 13/02 B 60 R 13/06 |
| | --- | | |
| A | DE-A-3 148 255 (BAYERISCHE MOTOREN WERKE) * Figure * | 1 | |
| | --- | | |
| A | US-A-4 409 756 (AUDENINO) * Column 2, lines 60-64; figure 1 * | 1 | |
| | --- | | |
| A | FR-A-2 464 857 (DAIMLER-BENZ) * Page 4, line 32 - page 5, line 4; figure 2 * | 1 | |
| | --- | | **TECHNICAL FIELDS SEARCHED (Int. Cl.4)** |
| A | DE-B-1 182 538 (GENERAL MOTORS) * Column 3, line 50 - column 4, line 4; figure 2 * | 1 | B 60 J 1 B 60 R 13 |
| | --- | | |
| P,X | DE-A-3 340 476 (VOLKSWAGENWERK) * Page 5, lines 3-13; figure * | 1,2,6 | |
| | --- | | |
| P,A | PATENTS ABSTRACTS OF JAPAN, vol. 9, no. 229 (M-413) [1952], 14th September 1985; & JP - A - 60 85 023 (NISSAN JIDOSHA K.K.) 14-05-1985 | 1 | |
| | ----- | | |

The present search report has been drawn up for all claims

| Place of search | Date of completion of the search | Examiner |
|---|---|---|
| THE HAGUE | 04-06-1986 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82